Europäisches Patentamt

European Patent Office

Office européen des brevets

(19)

(11) Numéro de publication: **0 120 726**
**B1**

(12) # FASCICULE DE BREVET EUROPEEN

(45) Date de publication du fascicule du brevet:
14.05.86

(51) Int. Cl.⁴: **B 65 D 8/06,** B 32 B 15/08

(21) Numéro de dépôt: 84400281.6

(22) Date de dépôt: 10.02.84

(54) Nouveau corps de boîte du type dit composite et boîte composite comportant ce corps.

(30) Priorité: 10.02.83 FR 8302124

(43) Date de publication de la demande:
03.10.84 Bulletin 84/40

(45) Mention de la délivrance du brevet:
14.05.86 Bulletin 86/20

(84) Etats contractants désignés:
AT BE CH DE GB IT LI LU NL SE

(56) Documents cités:
FR - A - 2 320 867
FR - A - 2 470 002
GB - A - 1 517 932
US - A - 3 580 464

(73) Titulaire: COMPAGNIE FRANCAISE DE RAFFINAGE
Société anonyme dite:, 5, rue Michel-Ange,
F-75781 Paris Cedex 16 (FR)

(72) Inventeur: Bunel, Gérard, 49, rue de Provence,
F-76600 Le Havre (FR)
Inventeur: Levy, Jean-Paul, rue de la Chapelle,
F-57400 Sarrebourg (FR)
Inventeur: Martinez, Christian, 64 Bois Châtaignier Saint
Laurent de Brévedent, F-76700 Harfleur (FR)

(74) Mandataire: Jolly, Jean-Pierre et al, Cabinet BROT et
JOLLY 83, rue d'Amsterdam, F-75008 Paris (FR)

# Description

La présente invention concerne les boîtes du type dit «composite», c'est-à-dire des boîtes dans lesquelles le fond et/ou le couvercle destinés à obturer de façon étanche le corps de la boîte sont en un matériau différent de celui dudit corps. Elle concerne plus particulièrement les boîtes de ce type dont le corps est muni intérieurement d'un polymère auquel adhèrent le fond et/ou le couvercle.

De telles boîtes composites sont utilisées de façon courante dans la technique pour le conditionnement, par exemple, de produits alimentaires.

Le corps de ces boîtes, dont la forme peut être absolument quelconque, comporte généralement une ossature en carton à une ou plusieurs couches, habillée intérieurement d'un complexe multicouche comprenant par exemple un papier et/ou une pellicule métallique, une couche de colle et un film d'un polymère tel que le polyéthylène haute densité, le polypropylène, le polychlorure de vinyle, etc. Habituellement, ce corps de boîte comporte aussi un habillage externe, sous la forme, par exemple, d'une couche externe adhérant au carton et susceptible d'être décorée. Cette couche peut être constituée de papier ou d'un complexe papier-métal, revêtu extérieurement d'une couche protectrice (vernis ou film polymère).

Les fonds et les couvercles sont habituellement en un métal tel que l'aluminium ou le fer-blanc ou en un matériau composite comprenant une couche métallique disposée vers l'intérieur de la boîte. La surface du métal peut être traitée ou revêtue de produits de protection tels que des vernis époxy.

Le corps de boîte, le fond et le couvercle (après remplissage de la boîte composite, pour ce dernier) sont généralement assemblés par sertissage, collage et/ou soudage.

Les modes de fabrication des différents constituants de ces boîtes sont bien connus dans la technique et aussi bien les corps que les fonds et les couvercles présentent habituellement d'excellentes caractéristiques techniques et, en particulier, une résistance à la corrosion satisfaisante, lorsque les produits conditionnés ne sont pas agressifs ou lorsque les conditions de conditionnement (température et pression) ne sont pas trop astreignantes.

En revanche, lorsqu'on soumet les boîtes préalablement remplies et obturées de façon étanche à des traitements thermiques sévères, par exemple en vue de pasteuriser ou de stériliser le produit conditionné, on constate qu'il est extrêmement difficile de maintenir un assemblage satisfaisant du corps, du fond et du couvercle.

Pour remédier à cet inconvénient, il a déjà été proposé de revêtir la face métallique du fond et du couvercle d'un polymère susceptible d'adhérer par thermosoudure, au niveau des arêtes du corps de la boîte, au polymère qui forme la couche interne de celui-ci.

Cette solution nécessite de revêtir les faces du fond et/ou du couvercle d'un polymère, ce qui accroît le coût de la boîte.

GB-A-1 517 932 décrit un corps de boîte composite comprenant une couche métallique revêtue d'une couche d'adhésif sur une partie de sa surface interne, destinée à être en contact avec un couvercle métallique. Ce couvercle comporte toutefois un bord roulé permettant de le fixer par compression sur ledit corps, ce qui complique les opérations de fabrication et de fermeture.

La présente invention vise à remédier aux inconvénients de la technique antérieure en proposant une boîte composite dans laquelle le fond et le couvercle continuent à obturer de façon étanche dans le temps le corps de boîte, même si celle-ci contient des produits agressifs ou si elle a été soumise à des conditions sévères de pression et de température, du type de celles engendrées par un traitement de pasteurisation ou de stérilisation.

A cet effet, l'invention a pour objet un corps de boîte composite constitué d'une paroi cylindrique ouverte aux deux extrémités, sur laquelle peuvent être fixés, pour constituer une boîte, un couvercle et/ou un fond, ledit corps de boîte comprenant un complexe d'au moins deux couches, une couche constituée d'une pellicule métallique et une couche interne superficielle d'un adhésif adhérant à ladite pellicule métallique, caractérisé en ce que ledit adhésif recouvre entièrement la surface interne de la pellicule métallique, de façon à pouvoir adhérer à une partie métallique d'un fond et/ou d'un couvercle pour constituer une boîte, et en ce qu'il comprend au moins un copolymère obtenu par polymérisation d'une mono-oléfine et greffage d'un acide carboxylique monoéthylénique.

La surface externe du corps de boîte et/ou ses arêtes pourront également être revêtues dudit complexe.

Ledit adhésif pourra également comprendre, en mélange avec ledit copolymère, un second composé choisi dans le groupe comprenant le polyéthylène basse densité, le polyéthylène haute densité, le polypropylène, le polyisobutylène, le polystyrène, les polyesters, les copolymères de l'éthylène et de l'acide acrylique, les «paraffines» et les «cires» provenant du raffinage du pétrole brut.

L'invention a également pour objet une boîte composite comprenant un corps, un fond et/ou un couvercle en contact direct par une partie métallique avec ledit corps, cette boîte étant caractérisée en ce que ledit corps est du type défini ci-dessus et en ce que ledit complexe adhère par sa couche adhésive à ladite partie métallique.

Des complexes multicouches de ce type sont bien connus dans la technique (voir FR-A-1 255 947 et FR-A-1 594 448) et la demanderesse a elle-même décrit en détail leur préparation et leur application à la réalisation de capsules de bouchage de bouteille en matière plastique, notamment dans les demandes de brevet français publiées FR 2 386 402, 2 442 261, 2 470 002, 2 489 827 et 2 507 539, ainsi que dans la demande N° 81 16315 du 26 août 1981.

La mono-oléfine que l'on polymérise pour réaliser le copolymère constituant ladite couche ou entrant dans la composition de celle-ci pourra être, par exemple, de l'éthylène ou du propylène, et l'acide carboxylique monoéthylénique que l'on greffe sur la polyoléfine ainsi obtenue sera notamment l'acide acrylique ou l'acide méthacrylique.

Parmi les composés susceptibles d'être présents avec le copolymère dans la couche du complexe figurent les «paraffines» et les «cires». On rappelle que les «paraffines» sont des mélanges d'hydrocarbures saturés, comportant une structure cristalline et dont la température de fusion est comprise entre 35°C et 66°C; la majeure partie de la «paraffine» est constituée par des hydrocarbures aliphatiques saturés linéaires; la teneur en huile est généralement inférieure à 5% en poids et, de préférence, inférieure à 1%. Les «cires» sont des mélanges d'hydrocarbures saturés de masses moléculaires plus élevées que la paraffine; une cire comporte plus de molécules cycliques et ramifiées et est également plus riche en huile que la paraffine; la cire est amorphe, sa température de fusion est comprise entre 66 et 100°C.

Comme décrit dans les brevets et demandes de brevet cités ci-dessus, les complexes multicouches utilisables dans le cadre de la présente invention peuvent être préparés en enduisant une pellicule métallique avec une suspension dans un liquide organique dudit copolymère et éventuellement dudit second composé et en éliminant ensuite ledit liquide organique.

Dans le cas où l'on utilise un film constitué simplement du copolymère obtenu par polymérisation d'une mono-oléfine et greffage d'un acide carboxylique monoéthylénique, ce film pourra être collé sur le métal ou calandré à chaud directement sur celui-ci. Un tel film pourra avoir une épaisseur d'environ 10 à 100 microns. Il pourra aussi être collé sur le métal par l'intermédiaire d'un mélange d'un copolymère identique et d'un second composé choisi dans le groupe comprenant le polyéthylène basse densité, le polyéthylène haute densité, le polyisobutylène, le polystyrène, les copolymères de l'éthylène et de l'acide acrylique, les «paraffines» et les «cires», car les propriétés adhésives d'un tel mélange ont été décrites par la demanderesse dans la demande N° 81 16315 précitée.

Dans le cas où la couche adhésive est obtenue à partir d'une suspension d'un copolymère ou d'un mélange dudit copolymère et d'un second composé, son épaisseur pourra être de l'ordre de 3 à 20 microns.

Dans les deux cas indiqués ci-dessus, la couche de polymère du complexe multicouche adhérera directement à la face métallique du fond et du couvercle de la boîte composite et l'on procédera pour ce faire à un thermoscellage utilisant des moyens connus dans la technique (fer chauffant, haute fréquence ou autre) pour amener la couche de polymère à sa température de ramollissement, tout en exerçant simultanément une faible pression sur le fond et sur le couvercle à son contact.

Le métal du fond et du couvercle sera, par exemple, de l'aluminium ou du fer-blanc, enduit ou non d'un vernis de protection. Bien entendu, le fond et le couvercle peuvent avoir, comme le corps de boîte, une structure composite adaptée à la nature des produits à conditionner et aux traitements ultérieurs (pasteurisation, stérilisation ou autre) qu'est appelée à subir la boîte pleine et obturée. On constate aux essais que la liaison entre le corps de boîte, le fond et le couvercle, résiste parfaitement à de tels traitements et assure une excellente étanchéité, même à très longue échéance. En outre, du fait que la couche d'adhésif recouvre toute la surface interne du corps de la boîte, l'étanchéité est assurée quand la pellicule métallique est constituée par une bande métallique enroulée en hélice avec recouvrement partiel.

Comme dans la technique antérieure, les fonds et les couvercles peuvent être ou non sertis sur le corps de la boîte et ce dernier peut comporter une ossature en carton habillée extérieurement d'une étiquette.

Les dessins annexés illustrent des formes de mise en œuvre de l'invention. Sur ces dessins:

La figure 1 est une coupe du corps de la boîte composite;

la figure 2 est une vue de détail à plus grande échelle illustrant un type d'assemblage entre le corps de boîte et le fond ou le couvercle;

la figure 3 est une vue analogue à la figure 2, illustrant un autre mode d'assemblage du corps de boîte et du fond ou du couvercle.

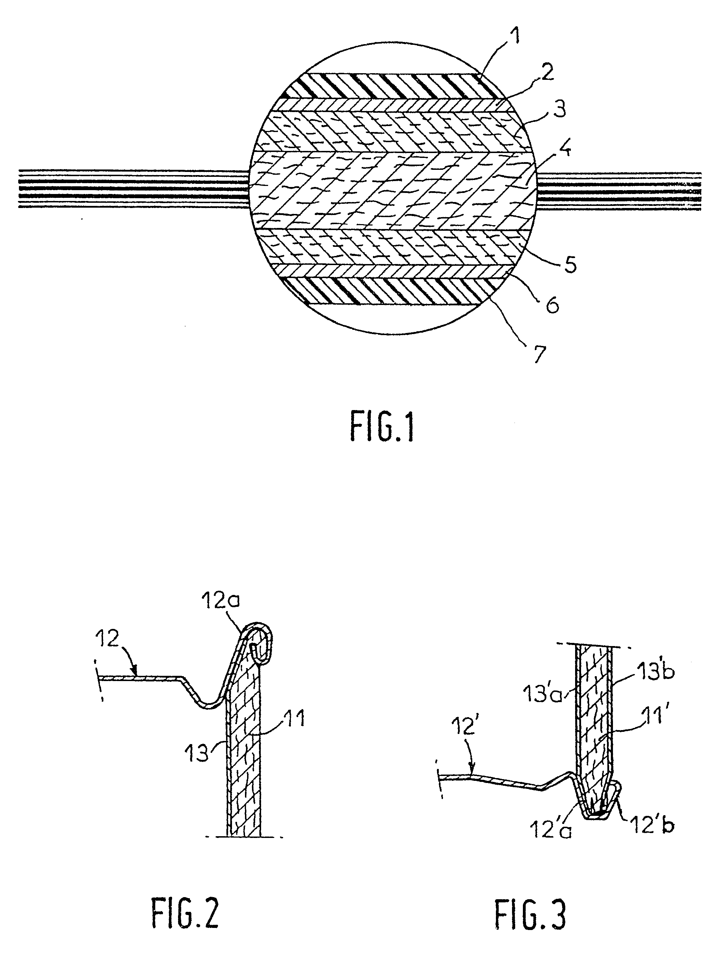

Le corps de boîte représenté en coupe sur la figure 1 comprend une pluralité de couches adhérant les unes aux autres, à savoir, de l'intérieur à l'extérieur:

— une couche interne 1 d'un copolymère obtenu par polymérisation d'une mono-oléfine, par exemple de l'éthylène, et greffage d'un acide carboxylique monoéthylénique, par exemple de l'acide acrylique, éventuellement en mélange avec un second composé tel que défini ci-dessus, l'épaisseur et la nature précise de cette couche étant choisies en fonction du but recherché et de la nature du produit conditionné dans la boîte composite;

— une pellicule 2 d'aluminium, de 8 à 12 microns d'épaisseur;

— une feuille 3 de papier kraft d'une masse spécifique de 40 g/m²;

— un ensemble 4 de deux à quatre couches de carton d'une masse spécifique de 300 g/m²;

— une feuille 5 de papier kraft d'une masse spécifique de 40 à 60 g/m²;

— une pellicule 6 d'aluminium de 8 à 9 microns d'épaisseur;

— une couche externe 7 de vernis ou d'un film résistant ou encore d'un copolymère de même type que celui de la couche interne 1, suivant le but recherché et le mode d'assemblage du corps de boîte et du fond ou du couvercle (voir description ci-après, en référence à la figure 3).

Ce corps de boîte peut donc comporter un complexe multicouche métal-copolymère aussi bien sur sa face interne que sur sa face externe, mais, naturellement, la structure qui vient d'être décrite n'est donnée qu'à titre d'exemple et n'a aucun caractère limitatif.

Il en est de même pour les figures 2 et 3 qui illustrent un mode d'assemblage d'un corps de boîte 11, respectivement 11', et d'un couvercle métallique ou d'un fond métallique, respectivement 12 et 12', serti sur le corps de boîte.

Dans le cas de la figure 2, le corps de boîte 11 comporte, sur sa face interne uniquement, un complexe multicouche dont la couche externe 13 est constituée d'un copolymère obtenu par polymérisation d'une mono-oléfine et greffage d'un acide carboxylique monoéthylénique, éventuellement en mélange avec un second composé tel que défini ci-dessus. La couche externe 13 adhère directement, par exemple, par thermosoudage, à la partie relevée 12a qui forme le bord du couvercle 12 serti sur le corps 11.

Dans le cas de la figure 3, le corps 11' comporte, sur ses deux faces, un complexe multicouche dont la face externe, respectivement 13'a, 13'b, analogue à la face 13 de la figure 2, adhère aux deux parties 12'a, 12'b, du couvercle qui sont serties sur le corps de boîte.

Naturellement, l'homme de l'art pourra concevoir bien d'autres modes d'assemblage du corps de boîte selon l'invention et du fond et/ou du couvercle sans sortir du cadre de l'invention.


## Revendications

1. Corps de boîte composite constitué d'une paroi cylindrique ouverte aux deux extrémités, sur laquelle peuvent être fixés, pour constituer une boîte, un couvercle (12) et/ou un fond (12'), ledit corps de boîte comprenant un complexe d'au moins deux couches, une couche constituée d'une pellicule métallique et une couche interne superficielle (13', 13'a) d'un adhésif adhérant à ladite pellicule métallique, caractérisé en ce que ledit adhésif recouvre entièrement la surface interne de la pellicule métallique, de façon à pouvoir adhérer à une partie métallique d'un fond (12') et/ou d'un couvercle (12) pour constituer une boîte, et en ce qu'il comprend au moins un copolymère obtenu par polymérisation d'une mono-oléfine et greffage d'un acide carboxylique monoéthylénique.

2. Corps de boîte selon la revendication 1, caractérisé en ce que la surface externe dudit corps et/ou ses arêtes sont également revêtues dudit complexe.

3. Corps de boîte selon l'une des revendications 1 et 2, caractérisé en ce que la mono-oléfine utilisée pour la préparation de ladite couche d'adhésif dudit complexe est choisie dans le groupe comprenant l'éthylène et le propylène.

4. Corps de boîte selon l'une des revendications 1 à 3, caractérisé en ce que l'acide carboxylique monoéthylénique utilisé pour la préparation de la couche d'adhésif dudit complexe est choisi dans le groupe comprenant l'acide acrylique et l'acide méthacrylique.

5. Corps de boîte selon l'une des revendications 1 à 4, caractérisé en ce que ledit adhésif comprend également, en mélange avec ledit copolymère, un second composé choisi dans le groupe comprenant le polyéthylène basse densité, le polyéthylène haute densité, le polypropylène, le polyisobutylène, le polystyrène, les polyesters, les copolymères de l'éthylène et de l'acide acrylique, les «paraffines» et les «cires» provenant du raffinage du pétrole brut.

6. Corps de boîte selon l'une des revendications 1 à 4, dans lequel ladite couche d'adhésif dudit complexe est constituée uniquement dudit copolymère, caractérisé en ce que ladite couche a une épaisseur d'environ 10 à 100 microns.

7. Corps de boîte selon la revendication 6, caractérisé en ce que ladite couche d'adhésif adhère à la couche de métal dudit complexe par l'intermédiaire d'un mélange d'un copolymère identique et d'un second composé choisi dans le groupe comprenant le polyéthylène basse densité, le polyéthylène haute densité, le polyisobutylène, le polystyrène, les copolymères de l'éthylène et de l'acide acrylique, les «paraffines» et les «cires».

8. Corps de boîte selon l'une des revendications 1 à 5, caractérisé en ce que ladite couche d'adhésif dudit complexe a une épaisseur d'environ 3 à 20 microns.

9. Corps de boîte selon l'une des revendications 1 à 8, caractérisé en ce que le métal dudit complexe est choisi dans le groupe comprenant l'aluminium et le fer-blanc.

10. Boîte composite comprenant un corps (11, 11'), un couvercle (12) et/ou un fond (12') en contact direct par une partie métallique avec ledit corps, caractérisée en ce que ledit corps est conforme à l'une des revendications 1 à 9 et en ce que ledit complexe adhère par sa couche adhésive (13, 13'a) à ladite partie métallique.

11. Boîte composite selon la revendication 10, caractérisée en ce que la partie métallique dudit fond (12') et/ou dudit couvercle (12) est constituée d'aluminium ou de fer-blanc.

12. Boîte composite selon l'une des revendications 10 et 11, caractérisée en ce que ledit fond (12') et/ou ledit couvercle (12) sont sertis sur ledit corps.


## Patentansprüche

1. Büchsenkörper mit Verbundstruktur mit einem zylindrischen, an beiden Endseiten offenen Mantel, an dem zur Herstellung einer Büchse ein Deckel (12) und/oder ein Boden (12') befestigt werden können, wobei der Büchsenkörper aus einem Verbundmaterial aus mindestens zwei Schichten aufgebaut ist, wobei eine Schicht aus einem Metallfilm besteht und eine innere Oberflächenschicht (13, 13a) aus einem an dem Metallfilm anhaftenden Haftmaterial besteht, dadurch gekennzeichnet, dass das Haftmaterial die gesamte innere Oberfläche des Metallfilmes derart bedeckt, dass es auf einem metallischen Teil eines Bodens (12') und/oder eines Deckels (12) zur Herstellung einer Büchse anhaften kann, und dass es wenigstens ein Copolymer enthält, das durch Polimerisation eines Monoolefins und Pfropfen einer Monoethylencarbonsäure erhalten wurde.

2. Büchsenkörper nach Anspruch 1, dadurch gekennzeichnet, dass die Aussenoberfläche des Körpers und/oder seine Kanten gleichfalls mit dem Verbundmaterial bedeckt sind.

3. Büchsenkörper nach Anspruch 1 oder 2, dadurch gekennzeichnet, dass das zur Herstellung der Haftschicht des Verbundmaterials verwendete Monoolefin aus der Ethylen und Propylen enthaltenden Gruppe ausgewählt wird.

4. Büchsenkörper nach einem der Ansprüche 1 bis 3, dadurch gekennzeichnet, dass die zur Herstellung der Haftschicht des Verbundmaterials verwendete Monoethylencarbonsäure aus der Acrylsäure und Methacrylsäure enthaltenden Gruppe ausgewählt wird.

5. Büchsenkörper nach einem der Ansprüche 1 bis 4, dadurch gekennzeichnet, dass das Haftmaterial in einem Gemisch mit dem Copolymer auch eine zweite Verbindung enthält, die aus der Gruppe umfassend Polyethylen niederer Dichte, Polyethylen hoher Dichte, Polypropylen, Polyisobutylen, Polystyrol, Polyester, Copolymere von Ethylen und Acrylsäure und aus der Raffination des Rohöls stammende „Paraffine" und „Wachse" ausgewählt ist.

6. Büchsenkörper nach einem der Ansprüche 1 bis 4, wobei die Haftschicht des Verbundmaterials ausschliesslich aus dem Copolymer besteht, dadurch gekennzeichnet, dass die Schicht eine Dicke von 10 bis 100 Mikron hat.

7. Büchsenkörper nach Anspruch 6, dadurch gekennzeichnet, dass die Haftschicht an der Metallschicht des Verbundmaterials unter Zwischenschaltung eines Gemisches aus einem identischen Copolymer und einer zweiten, aus der Polyethylen niedriger Dichte, Polyethylen hoher Dichte, Polyisobutylen, Polystyrol, Copolymere aus Ethylen und Acrylsäure, „Paraffine" und „Wachse" enthaltenden Gruppe gewählten Verbindung haftet.

8. Büchsenkörper nach einem der Ansprüche 1 bis 5, dadurch gekennzeichnet, dass die Haftschicht des Verbundmaterials eine Dicke von ungefähr 3 bis 20 Mikron aufweist.

9. Büchsenkörper nach einem der Ansprüche 1 bis 8, dadurch gekennzeichnet, dass das Metall des Verbundmaterials aus der Aluminium und Weissblech enthaltenden Gruppe ausgewählt wird.

10. Verbundbüchse mit einem Körper (11, 11'), einem Deckel (12) und/oder einem mit dem Körper mittels eines Metallelements direkt in Verbindung stehenden Boden (12'), dadurch gekennzeichnet, dass der Körper gemäss einem der Ansprüche 1 bis 9 ausgebildet ist und dass das Verbundmaterial durch seine Haftschicht (13, 13'a) am Metallelement haftet.

11. Verbundbüchse nach Anspruch 10, dadurch gekennzeichnet, dass das Metallelement des Bodens (12') und/oder des Deckels (12) aus Aluminium oder Weissblech besteht.

12. Verbundbüchse nach Anspruch 10 oder 11, dadurch gekennzeichnet, dass der Boden (12') und/oder der Deckel (12) am Körper eingefalzt sind.

## Claims

1. A body for a composite container, comprising a cylindrical wall open at its two ends, to which can be fastened, so as to form a container, a cover (12) and/or a bottom (12'), said container body comprising a complex of at least two layers, one layer of a metallic foil and a superficial inner layer (13, 13a) consisting of an adhesive adhering to said metallic foil, characterised in that said adhesive completely covers the inner surface of the metallic foil so as to be able to adhere to a metallic portion of a bottom (12') and/or of a cover (12) to form a container, and in that it comprises at least one copolymer obtained by polymerisation of a mono-olefin and by grafting a monoethylenic carboxylic acid.

2. A container body according to Claim 1, characterised in that the outer surface of said body and/or its edges are also covered with said complex.

3. A container body according to either of Claims 1 and 2, characterised in that the mono-olefin used for the preparation of said adhesive layer for said complex is chosen from the group comprising ethylene and propylene.

4. A container body according to any of Claims 1 to 3, characterised in that the monoethylenic carboxylic acid used for the preparation of the layer of adhesive for said complex is chosen from the group comprising acrylic acid and methacrylic acid.

5. A container body according to any of Claims 1 to 4, characterised in that said adhesive also comprises, in mixture with said copolymer, a second compound chosen from the group comprising low-density polyethylene, high-density polyethylene, polypropylene, polyisobutylene, polystyrene, the polyesters, the copolymers of ethylene and acrylic acid, "paraffins" and "waxes" originating from the refining of crude petroleum.

6. A container body according to any of Claims 1 to 4, in which said adhesive layer for said complex consists solely of said copolymer, characterised in that said layer has a thickness of about 10 to 100 microns.

7. A container body according to Claim 6, characterised in that said adhesive layer adheres to the metal layer of said complex by way of a mixture of an identical copolymer and a second compound chosen from the group comprising low-density polyethylene, high-density polyethylene, polyisobutylene, polystyrene, the copolymers of ethylene and acrylic acid, "paraffins" and "waxes".

8. A container body according to any of Claims 1 to 5, characterised in that said adhesive layer for said complex has a thickness of about 3 to 20 microns.

9. A container body according to any of Claims 1 to 8, characterised in that the metal for said complex is chosen from the group comprising aluminium and tin plate.

10. A composite container comprising a body (11, 11'), a cover (12) and/or a bottom (12') in direct contact with said body through a metallic portion, characterised in that said body is in conformity with any of Claims 1 to 9 and in that said complex adheres to said metallic portion by its adhesive layer (13, 13'a).

11. A composite body according to Claim 10, characterised in that the metallic portion of said bottom (12') and/or of said cover (12) consists of aluminium or tin plate.

12. A composite body according to either of Claims 10 and 11, characterised in that said bottom (12') and/or said cover (12) are crimped on to said body.

FIG.1

FIG.2

FIG.3